# EUROPEAN PATENT SPECIFICATION

(11) **EP 4 199 237 B1**
(45) Date of publication and mention of the grant of the patent: **06.05.2026**
(21) Application number: 22204973.6
(22) Date of filing: 02.11.2022
(51) Int. Cl.: H01M 50/533, H01M 50/534, H01M 50/548, H01M 50/536, H01M 50/553

(54) **SECONDARY BATTERY**
SEKUNDÄRBATTERIE
BATTERIE SECONDAIRE

(30) Priority: 14.12.2021 KR 20210178555
(43) Date of publication of application: 21.06.2023
(73) Proprietor: Samsung SDI Co., Ltd., Yongin-si, Gyeonggi-do 17084 (KR)
(72) Inventor: Lee, Hyun Soo, 17084 Yongin-si, Geyonggi-do (KR)
(74) Representative: Gulde & Partner

(56) References cited:
- US-A1- 2012 094 172

## Description

### BACKGROUND

### 1. Field

Aspects of some embodiments of the present disclosure relate to a secondary battery.

### 2. Description of the Related Art

A secondary battery is a power storage system that provides relatively high energy density for storing electrical energy in the form of chemical energy. Compared to non-rechargeable primary batteries, secondary batteries are rechargeable and are widely used in electronic devices (e.g., portable electronic devices) such as smartphones, cellular phones, laptops, and tablet PCs.

Recently, in order to prevent or reduce environmental pollution, interest in electric vehicles has increased, and high-capacity secondary batteries are being adopted for use in electric vehicles. Such secondary batteries may generally have characteristics such as relatively high density, relatively high output, and relatively high stability. For example, document US 2012/094172 A1 discloses a battery comprising a housing made by a metal or a metal alloy; a battery core in the housing; an electrolyte in the housing; a cover assembly having a positive terminal electrically connected with the positive plate and a negative terminal electrically connected with the negative plate; and a protection to prevent the housing from being corroded by the electrolyte.

The above information disclosed in this Background section is only for enhancement of understanding of the background of the invention and therefore it may contain information that does not constitute prior art.

### SUMMARY

Aspects of some embodiments of the present disclosure include a secondary battery which is entirely made of a multi-layered metal thin film to increase the overall cross-sectional area, thereby improving a heat generation property, and facilitating bending.

In addition, embodiments according to the present disclosure include a secondary battery that may be capable of preventing or reducing damage during welding by wrapping a region of a current collector, which is connected to a terminal and an electrode assembly, with a thicker metal than a metal thin film.

These and other aspects and characteristics of embodiments according to the present disclosure will be described in more detail or will be apparent from the following description of some embodiments of the present disclosure.

The invention is set out in the appended set of claims. A secondary battery of the present disclosure includes an electrode assembly having a first electrode tab and a second electrode tab exposed to both sides, respectively, a first current collector coupled to the first electrode tab of the electrode assembly, a case accommodating the electrode assembly and the first collector and having both sides opened, a first cap plate sealing an opening of one side of the case, and a first terminal coupled to the first current collector and exposed, in particular partially exposed, to the outside of the first cap plate, wherein the first current collector includes a first main plate on which the multi-layered metal thin film is overlapped, and a first sub-plate surrounding both ends of the first main plate in the longitudinal direction, respectively. In particular, the outside of the first cap plate may correspond to the outside of the secondary battery.

According to some embodiments, in the first current collector, a first sub-plate of one side may be in contact with and welded to the first electrode tab, and a first sub-plate of the other side may be in contact with and welded to the first terminal.

According to some embodiments, the first current collector may include a connection part formed of the first main plate, a first tab coupling part extending outwardly from one end of the connection part, comprising the first main plate and the first sub-plate surrounding the first main plate, and coupled to the first electrode tab, and a first terminal coupling part extending outwardly from the other end of the connection part, comprising the first main plate and the first sub-plate surrounding the first main plate, and coupled to the first terminal.

According to some embodiments, in the first current collector, a surface on which the first tab coupling part is in contact with and welded to the first electrode tab may be the same as a surface on which the first terminal coupling part is in contact with and welded to the first terminal, and the connection part may be bent at least once.

According to some embodiments, the thickness of the first sub-plate may be 2 to 5 times the thickness of a metal thin film of the first main plate.

According to some embodiments, the first main plate may be compressed in a state in which 4 to 10 sheets of the metal thin film of 0.05-0.2 mm are overlapped.

According to some embodiments, the first terminal may include a first inner terminal plate positioned inside the first cap plate, a first outer terminal plate positioned outside the first cap plate, and a first terminal pillar coupled to the first inner terminal plate and the first cap plate from the inside, passing through the first cap plate, and coupled to the first outer terminal plate from the outside of the first cap plate.

According to some embodiments, in the first current collector, the sub-plate may be coupled, in particular fixedly coupled, to one surface of the first inner terminal plate, e.g. by welding.

According to some embodiments, the secondary battery may further include a second current collector coupled to the second electrode tab of the electrode assembly, a second cap plate sealing the opening of the other side of the case, and a second terminal coupled to the second current collector and exposed to the outside of the second cap plate.

According to some embodiments, the second current collector may include a second main plate on which a multi-layered metal thin film is overlapped, and a second sub-plate surrounding both ends of the second main plate in the longitudinal direction, respectively.

According to some embodiments, the thickness of the first sub-plate may be 0.1 mm or more.

### BRIEF DESCRIPTION OF DRAWINGS

FIG. 1 is a perspective view illustrating a secondary battery according to some embodiments of the present disclosure.
FIG. 2 is a cross-sectional view taken along the line 2-2' in the secondary battery of FIG. 1.
FIG. 3 is a perspective view illustrating a current collecting part in the secondary battery of FIG. 1.
FIG. 4 is an enlarged cross-sectional view of a portion 4 of FIG. 3.

### DETAILED DESCRIPTION

Hereinafter, aspects of some embodiments of the present disclosure will be described in more detail with reference to the accompanying drawings.

Aspects of some embodiments of the present disclosure are provided to more completely explain the characteristics of embodiments according to present disclosure to those skilled in the art, and the following examples may be modified in various other forms. The present disclosure, however, may be embodied in many different forms and should not be construed as being limited to the example embodiments set forth herein. Rather, these example embodiments are provided so that this disclosure will be thorough and complete and will convey the aspects and features of the present disclosure to those skilled in the art.

In addition, in the accompanying drawings, sizes or thicknesses of various components are exaggerated for brevity and clarity. Like numbers refer to like elements throughout. As used herein, the term "and/or" includes any and all combinations of one or more of the associated listed items. In addition, it will be understood that when an element A is referred to as being "connected to" an element B, the element A can be directly connected to the element B or an intervening element C may be present therebetween such that the element A and the element B are indirectly connected to each other.

The terminology used herein is for the purpose of describing particular embodiments only and is not intended to be limiting of the disclosure. As used herein, the singular forms are intended to include the plural forms as well, unless the context clearly indicates otherwise. It will be further understood that the terms that the terms "comprise" and/or "comprising," when used in this specification, specify the presence of stated features, numbers, steps, operations, elements, and/or components, but do not preclude the presence or addition of one or more other features, numbers, steps, operations, elements, components, and/or groups thereof.

It will be understood that, although the terms first, second, etc. may be used herein to describe various members, elements, regions, layers and/or sections, these members, elements, regions, layers and/or sections should not be limited by these terms. These terms are only used to distinguish one member, element, region, layer and/or section from another. Thus, for example, a first member, a first element, a first region, a first layer and/or a first section discussed below could be termed a second member, a second element, a second region, a second layer and/or a second section without departing from the teachings of the present disclosure.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the element or feature in the figures is turned over, elements described as "below" or "beneath" other elements or features would then be oriented "on" or "above" the other elements or features. Thus, the term "below" can encompass both an orientation of above and below.

Aspects of some embodiments of the present disclosure will be described in more detail with reference to the accompanying drawings to the extent that a person skilled in the art to which the present disclosure pertains can easily practice the present disclosure.

Here, the same reference numerals are given to parts having similar configurations and operations throughout the specification. In addition, it will be understood that when a portion is referred to as being electrically coupled to another portion, this includes not only the case where it is directly connected, but also the case where it is connected with another element interposed therebetween.

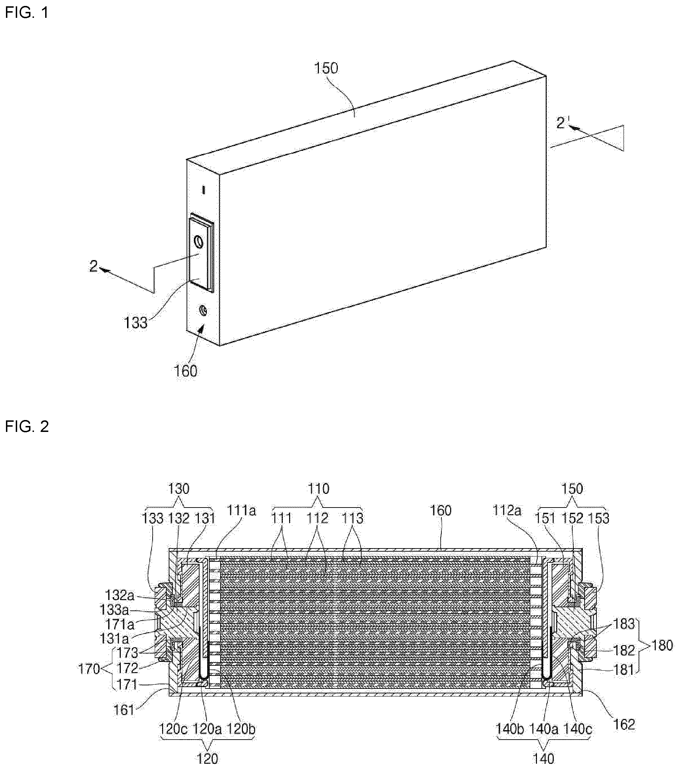

Referring to FIG. 1, a perspective view illustrating a secondary battery according to some embodiments of the present disclosure is shown. Referring to FIG. 2, a cross-sectional view taken along the line 2-2' in the secondary battery of FIG. 1 is shown.

As shown in FIGS. 1 and 2, the secondary battery 100 may include an electrode assembly 110, a first current collector 120, a first terminal 130, a second current collector 140, a second terminal 150, a case 160, a first cap assembly 170, and/or a second cap assembly 180. The present disclosure is, however, not limited to the secondary battery 100 as illustrated in FIGS. 1 and 2. In particular, one or more features of the secondary battery 100 may also be omitted (e.g. the second current collector 140, the second terminal 150, the first cap assembly 170, and/or the second cap assembly 180).

The electrode assembly 110 may be formed by winding or stacking a stack of the first electrode plate 111, the separator 113, and the second electrode plate 112, which are formed in forms of thin plates or films. When the electrode assembly 110 is a wound laminate, the winding axis may be parallel to the longitudinal direction (e.g., the direction that extends parallel to a longest side) of the case 160 (that is, the direction perpendicular to the longitudinal direction of the first cap assembly 170 and the second cap assembly 180). Alternatively, the electrode assembly 110 may be a stack type rather than a winding type, and embodiments according to the present disclosure are not limited to the shape of the electrode assembly 110 illustrated in FIGS. 1 and 2. In addition, the electrode assembly 110 may be accommodated in the case 160 by stacking one or more electrode assemblies 110 so that the long sides thereof are adjacent to each other, and embodiments according to the present disclosure do not limit the number of electrode assemblies 110.

The first electrode plate 111 of the electrode assembly 110 may serve as a negative electrode, and the second electrode plate 112 may serve as a positive electrode. Of course, the reverse is also possible.

The first electrode plate 111 may be formed by coating a first electrode active material, such as graphite or carbon, on a first electrode current collector formed of a metal foil, such as copper, a copper alloy, nickel, or a nickel alloy, and may include a first electrode tab 111a (or a first uncoated portion), which is a region to which the first electrode active material is not applied. The first electrode tab 111a may serve as a passage for current flow between the first electrode plate 111 and the first current collector 120. According to some embodiments, the first electrode tab 111a may be formed by cutting in advance so as to protrude from one side when the first electrode plate 111 is manufactured, and may be formed integrally with the first electrode plate 111. According to some embodiments, multiple first electrode tabs 111a may be collected and then coupled, in particular fixedly coupled, e.g. by tack welding. According to some embodiments, in the first electrode plate 111, the first uncoated portion 111a of the first electrode plate 111 may protrude more to one side than the separator 113 without a separate cutting process. Here, a separate metal plate (electrode tab) may be coupled, in particular fixedly coupled, to the first uncoated portion 111a of the first electrode plate 111 exposed to one side of the electrode assembly 110, e.g. by welding, or the first current collector 120 may be directly coupled, in particular fixedly coupled, to the first uncoated portion 111a of the electrode assembly 110, e.g. by welding.

The second electrode plate 112 may be formed coating a second electrode active material, such as a transition metal oxide, on a second electrode current collector formed of a metal foil, such as aluminum or an aluminum alloy, and may include a second electrode tab 112a (or a second uncoated portion) that is a region to which the second electrode active material is not applied. The second electrode tab 112a may serve as a passage for current flow between the second electrode plate 112 and the second current collector 140. According to some embodiments, the second electrode tab 112a may be formed by cutting in advance so as to protrude to one side when the second electrode plate 112 is manufactured, and may be formed integrally with the second electrode plate 112. According to some embodiments, multiple second electrode tabs 112a may be collected and then coupled, in particular fixedly coupled, e.g. by tack welding, and a separate metal plate that may serve as an electrode tab may be welded and coupled to the coupled, in particular fixedly coupled, e.g. tack-welded, second electrode tab 112a. According to some embodiments, in the second electrode plate 112, the second uncoated portion 112a of the second electrode plate 112 may protrude more to the other side than the separator 113 without a separate cutting process. Here, a separate metal plate (electrode tab) may be coupled, in particular fixedly coupled, to the second uncoated portion 112a exposed to the other side of the electrode assembly 110, e.g. by welding, or the second current collector 140 may be directly coupled, in particular fixedly coupled, to the second uncoated portion 112a of the electrode assembly 110, e.g. by welding.

According to some embodiments, the first electrode tab 111a may be positioned on the left end side of the electrode assembly 110, and the second electrode tab 112a may be positioned on the right end surface of the electrode assembly 110. Here, the left and right sides are designated for convenience of explanation on the basis of the secondary battery 100 shown in FIGS. 1 and 2, and when the secondary battery 100 is rotated left and right or up and down, the positions may be changed. Various components will now be described in more detail with respect to the secondary battery 100 shown in FIGS. 1 and 2.

According to some embodiments, the separator 113 may be positioned between the first electrode plate 111 and the second electrode plate 112 to prevent or reduce instances of a short circuit and to enable the movement of lithium ions, and may include polyethylene, polypropylene, or a composite film of ethylene and polypropylene. In addition, the separator 113 may be replaced with an inorganic solid electrolyte such as a sulfide-based, oxide-based or phosphate-based electrolyte that does not require a liquid or gel electrolyte.

The first current collector 120 and the second current collector 140, which are electrically connected to the first electrode tab 111a of the first electrode plate 111 and the second electrode tab 112a of the second electrode plate 112, respectively, may be positioned at both ends of the electrode assembly 110. According to some embodiments, the electrode assembly 110 may be accommodated in the case 160 together with an electrolyte.

According to some embodiments, the electrolyte may include a lithium salt, such as LiPF6 or LiBF4 in an organic solvent, such as EC, PC, DEC, EMC, or DMC. In addition, the electrolyte may be in a liquid or gel phase. According to some embodiments, when an inorganic solid electrolyte is used, the electrolyte may be omitted. inorganic solid electrolyte is used, the electrolyte may be omitted.

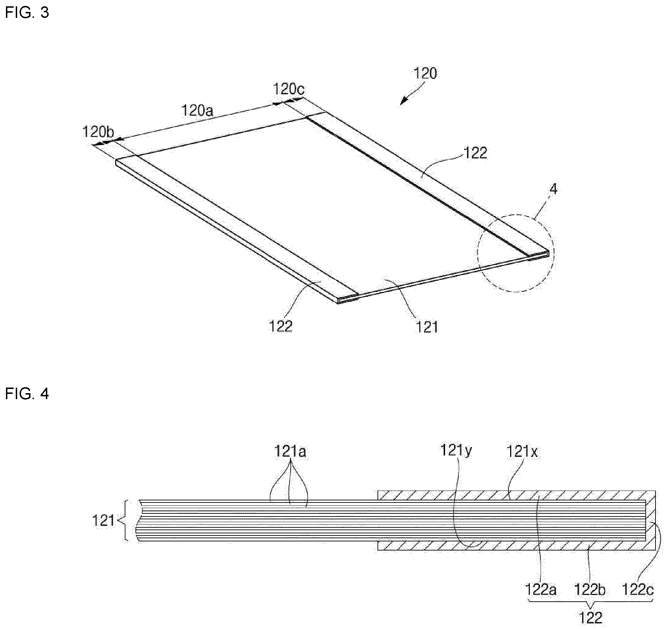

The first current collector 120 may be formed of a metal, and may electrically connect the first electrode plate 111 and the first terminal 130 to each other. Referring to FIG. 3, a perspective view before the first current collector 120 is connected between the first electrode plate 111 and the first terminal 130 in the secondary battery 100 of FIG. 1 is shown. Referring to FIG. 4, an enlarged view illustrating four parts of the first current collector 120 of FIG. 3 is shown. Hereinafter, the configuration of the first current collector 120 will be described in more detail with reference to FIGS. 3 and 4.

The first current collector 120 includes a first main plate 121 (e.g. having a substantially rectangular plate shape) and a first sub-plate 122 surrounding regions (e.g., set or predetermined regions) of both ends of the first main plate 121 in the longitudinal direction, respectively.

The first main plate 121 may be formed by stacking or winding a plurality of first metal thin films 121z and then pressing. For example, the first main plate 121 may be formed by entirely pressing the metal thin films of 0.05 mm to 0.2 mm in a state in which 4 to 10 sheets of metal thin films are overlapped. Here, it may be difficult to manufacture a metal thin film having a thickness of less than 0.05 mm, and when the thickness thereof exceeds 0.2 mm, the ductility of the first main plate 121 having a plurality of metal thin films overlapped may be deteriorated. In addition, when the first main plate 121 has fewer than four metal thin films overlapping each other, the first current collector 120 may be broken or damaged due to a decrease in rigidity. In addition, when using the first main plate 121 overlapping more than 10 metal thin films, the capacity of the secondary battery 100 may be reduced due to an unnecessary volume increase of the first current collector 120.

Here, the first metal thin film 121z for forming the first main plate 121 may be made of copper or a copper alloy. The first main plate 121 may have a plurality of first metal thin films 121z overlapped and thus have a thickness (e.g., a set or predetermined thickness). The first main plate 121 may include a flat surface 121x and the other flat surface 121y opposite to the one surface 121x. In addition, the first main plate 121 may have an outermost first metal thin film 121z positioned on each of one surface 121x and the other surface 121y, and edges of the plurality of overlapping first metal thin films 121z may be exposed through four side surfaces connecting the one surface 121x and the other surface 121y.

The first sub-plate 122 has a substantially rectangular plate shape, and may surround two sides of the first main plate 121 facing each other. That is, two first sub-plates 122 may wrap one side region positioned at both ends of the first main plate 121 in the longitudinal direction and the other side region facing the one side region, respectively. The widthwise length of each of the first sub-plates 122 may be equal to that of the first main plate 121. That is, each of the first sub-plates 122 may cover both of the one surface 121x and the other surface 121y in the one side region of the first main plate 121, and may cover both of the one surface 121x and the other surface 121y in the other side region. For example, when the first main plate 121 is of a type in which a plurality of first metal thin films 121z are wound, the first sub-plate 122 may cover the side surfaces of the first main plate 121, which are rounded by winding.

Each of the first sub-plates 122 may include a first region 122a covering one surface 121x of the first main plate 121, a second region 122b covering the other surface 121y of the first main plate 121, and a third region 122c connecting the first region 122a and the second region 122b. For example, the first region 122a and the second region 122b in the first sub-plate 122 may have the same size, but the size may be changed in various manners without being limited thereto.

The first sub-plate 122 may be adhered and fixed to one side region and the other side region by ultrasonic- or resistance-welding the first region 122a and the second region 122b in a state in which the first main plate 121 is interposed therebetween. That is, the first sub-plate 122 may be adhered and fixed to the one side region and the other side region of the first main plate 121 by welding, respectively.

The thickness of the first sub-plate 122 may be greater than the thickness of one sheet of the first metal thin film 121z included in the first main plate 121. For example, the thickness of the first sub-plate 122 may be 2 to 5 times greater than the thickness of the first metal thin film 121z. In addition, the thickness of the first sub-plate 122 may be 0.1 mm or more. Here, when the thickness of the first sub-plate 122 is less than twice the thickness of the first metal thin film 121z or less than 0.1 mm, damage may occur to the first sub-plate 122 or the first main plate 121 when being coupled, in particular fixedly coupled, to the first electrode tab 111a and/or the first terminal 130, e.g. by welding. In addition, when the thickness of the first sub-plate 122 is greater than 5 times the thickness of the first metal thin film 121z, only the capacity of the secondary battery 100 having the same area may be reduced due to an unnecessary thickness increase.

The first current collector 120 may include a connecting part 120a consisting of only or comprising the first main plate 121, and a first tab coupling part 120b and a first terminal coupling part 120c which extend outwardly from both ends of the connecting part 120a and consist of or comprises the first main plate 121 and the first sub-plate 122 surrounding the first main plate 121. In other words, a region of the first main plate 121 to which the first sub-plate 122 is coupled may be referred to as the first tab coupling part 120b. In addition, the other region of the first main plate 121 to which the first sub-plate 122 is coupled may be referred to as the first terminal coupling part 120c.

In the first current collector 120, the first tab coupling part 120b may be in contact with and coupled, in particular fixedly coupled, to the first electrode tab 111a of the electrode assembly 110, e.g. by welding. In addition, in the first current collector 120, the first terminal coupling part 120c may be in contact with and coupled, in particular fixedly coupled, to the first terminal 130, e.g. by welding. In addition, in the first current collector 120, a surface in contact with the first electrode tab 111a and a surface in contact with the first terminal 130 may be the same and one surface. In addition, in the first current collector 120, the first tab coupling part 120b and the first terminal coupling part 120c of the other surface opposite to the one surface may face each other. That is, the connecting part 120a of the first current collector 120 may be bent at least once.

In the first current collector 120, the connecting part 120a consists of or comprises the first main plate 121 made of a multi-layered metal thin film 121z, and thus bending may be facilitated. In addition, in the first current collector 120, the first tab coupling part 120b and the first terminal coupling part 120c are shaped such that the first main plate 121 made of the multi-layered metal thin film 121z is surrounded by the first sub-plate 122, thereby preventing or reducing instances of the multi-layered metal thin film 121z being damaged during welding. In addition, in the first current collector 120, the first main plate 121 is made of a multi-layered metal thin film 121z, the overall cross-sectional area can be increased, thereby improving a heat generation property.

The first terminal 130 may be formed of a metal and may be electrically connected to the first current collector 120. According to some embodiments, the first terminal 130 may include a first inner terminal plate 131, a first terminal pillar 132, and a first outer terminal plate 133.

Here, the first inner terminal plate 131 may be located inside a first cap plate 171 to be described below, and the first outer terminal plate 133 may be located outside the first cap plate 171. Of course, a first coupling member 172 may be further interposed between the first outer terminal plate 133 and the first cap plate 171. In addition, a first seal gasket 173 may be further interposed between the first terminal pillar 132 and the first cap plate 171 and between the first inner terminal plate 131 and the first cap plate 171. In addition, the first terminal pillar 132 may pass through the first cap plate 171 to be coupled to the first outer terminal plate 133 from the outside of the first cap plate 171 and to be coupled to the first inner terminal plate 131 from the inside of the first cap plate 171.

The first inner terminal plate 131 may be in contact with and coupled to the first terminal coupling part 120c of the first current collector 120 on one surface positioned on the right side. The first inner terminal plate 131 may include a terminal hole 131a penetrating between one surface and the other surface. Of course, the terminal hole 131a may be formed to correspond to the diameter of the first terminal pillar 132.

The first terminal pillar 132 may be fitted and coupled to the terminal hole 131a of the first inner terminal plate 131. For example, the first terminal pillar 132 may be fixed by riveting and/or welding on one surface while being inserted into the terminal hole 131a of the first inner terminal plate 131. The first terminal coupling part 120c of the first current collector 120 may be coupled to one surface of the first inner terminal plate 131 coupled, in particular fixedly coupled, to the first terminal pillar 132, e.g. by welding.

The first terminal pillar 132 may have a pillar shape and may protrude and extend to the outside of the first cap plate 171. In addition, the first terminal pillar 132 may have a flange 132a formed outside the first cap plate 171 so as to prevent or reduce instances of the first terminal pillar 132 being dislodged from the first cap plate 171. The first terminal pillar 132 may be fitted and coupled to the terminal hole 133a of the first outer terminal plate 133 from the outside with respect to the first cap plate 171 and may be inserted into and coupled to the terminal hole 131a of the first inner terminal plate 131 from the inside. Here, the flange 132a may be positioned between the first outer terminal plate 133 and the first cap plate 171.

The first outer terminal plate 133 may include a terminal hole 133a penetrating between one surface and the other surface. An outer extension of the first terminal pillar 132 may be inserted into the terminal hole 133a of the first outer terminal plate 133 to be coupled thereto. For example, the first terminal pillar 132 may be fixed by riveting and/or welding on the other surface positioned on the left side while being inserted into the terminal hole 133a of the first outer terminal plate 133 from the outside of the first cap plate 171. The first outer terminal plate 133 may have one side surface positioned on the right side and may face the outer surface of the first cap plate 171. Of course, an insulating member 172 for insulation may be interposed between one surface of the first outer terminal plate 133 and the outer surface of the first cap plate 171.

The first inner terminal plate 131, the first terminal pillar 132, and the first outer terminal plate 133, which serve as the first terminal 130, may be made of copper or a copper alloy. In the first terminal 130, the first outer terminal plate 133 and the first terminal pillar 132 may be exposed and protrude to the outside of the first cap plate 171. In addition, the first terminal pillar 132 and the first inner terminal plate 131 may be electrically connected to the first current collector 120 inside the first cap plate 171.

Here, one surface of the first inner terminal plate 131 may face the left surface of the electrode assembly 110. Of course, the first current collector 120 may be interposed between one surface of the first inner terminal plate 131 and the left end side surface of the electrode assembly 110 to electrically connect the first terminal 130 and the first electrode tab 111a of the electrode assembly 110 to each other.

The second current collector 140 may include a second main plate having a substantially rectangular plate shape, and a second sub-plate surrounding regions (e.g., set or predetermined regions) of both ends of the second main plate in the longitudinal direction, respectively. In addition, the second main plate may be formed by stacking or winding a multi-layered metal thin film and then pressing. In addition, the second current collector 140 may include a connecting part 140a consisting of only or comprising the second main plate, and a second tab coupling part 140b and a second terminal coupling part 140c which extend outwardly from both ends of the connecting part 140a and consist of or comprises the second main plate and the second sub-plate surrounding the second main plate.

The second current collector 140 may have the same shape and structure as the first current collector 120. However, the second current collector 140 may be coupled to the electrode assembly 110 and the second terminal 150 so as to be symmetrical to the first current collector 120 with respect to the electrode assembly 110. In addition, the second current collector 140 may be made of aluminum or an aluminum alloy.

The second terminal 150 may be formed of a metal and may be electrically connected to the second current collector 140. According to some embodiments, the second terminal 150 may include a second inner terminal plate 151, a second terminal pillar 152, and a second outer terminal plate 153.

Here, the second inner terminal plate 151 may be located inside the second cap plate 181, and the second outer terminal plate 153 may be located outside the second cap plate 181. Of course, a second seal gasket 183 may be further interposed between the second outer terminal plate 153 and the second cap plate 181. In addition, the second seal gasket 183 may be further interposed between the second terminal pillar 152 and the second cap plate 181 and between the second inner terminal plate 151 and the second cap plate 181. In addition, the second terminal pillar 152 may pass through the second cap plate 181 to be coupled to the second outer terminal plate 153 from the outside of the second cap plate 181 and to be coupled to the second inner terminal plate 151 from the inside of the second cap plate 181.

The second terminal 150 may have the same shape and structure as the first terminal 130. However, the second terminal 150 may be coupled to the electrode assembly 110 through the second current collector 140 so as to be symmetrical to the first terminal 130 with respect to the electrode assembly 110. In addition, the second terminal 150 may be made of aluminum or an aluminum alloy.

The case 160 may have a substantially hollow rectangular parallelepiped shape in which openings 161 and 162 are formed on both sides. The electrode assembly 110 coupled to the first current collector 120 and the second current collector 140 may be inserted into the case 160 through the openings 161 and 162.

The first cap assembly 170 may be coupled to the left-side opening 161 of the case 160. According to some embodiments, the first cap assembly 170 may include a first cap plate 171, a first coupling member 172, and a first seal gasket 173. The first cap plate 171 may have a flat square plate shape to seal the left-side opening 161 of the case 160. The first cap plate 171 may include a terminal hole 171a penetrating between the outer surface and the inner surface. The first terminal pillar 132 may pass through the terminal hole 171a of the first cap plate 171 to be coupled to the first cap plate 171. In addition, the first terminal pillar 132 may be coupled with the first outer terminal plate 133 on the left side of the first cap plate 171 in the left side of the first cap plate 171, and may be coupled to the first inner terminal plate 131 on the right side of the first cap plate 171. Here, the first inner terminal plate 131 and a portion of the right side of the first terminal pillar 132 may be located inside the case 160.

The first coupling member 172 may be interposed between the outer surface of the first cap plate 171 and the first outer terminal plate 133. The first coupling member 172 may be in close contact with the first cap plate 171, and may also be in close contact with the first seal gasket 173. The first coupling member 172 may be made of an insulating material, and may insulate the first cap plate 171 and the first outer terminal plate 133 from each other and the first cap plate 171 and the first terminal pillar 132 from each other.

In addition, the first seal gasket 173 may be made of an insulating material and may be formed between the first cap plate 171 and the first terminal 130 to seal the space between the first cap plate 171 and the first terminal 130. That is, the first seal gasket 173 may be interposed between the first cap plate 171 and the first terminal pillar 132, and between the first cap plate 171 and the first inner terminal plate 131. The first seal gasket 173 may prevent or reduce instances of external moisture penetrating into the secondary battery 100 or may prevent or reduce instances of an electrolyte contained in the secondary battery 100 leaking out.

In addition, after the electrode assembly 110 having the first current collector 120 coupled thereto is accommodated in the case 160, the first cap plate 171 coupled to the first terminal 130 may seal the opening of the case 160. Of course, before the first cap plate 171 seals the case 160, the first terminal coupling part 120c of the first current collector 120 and the first inner terminal plate 131 of the first terminal 130 may be coupled, in particular fixedly coupled, to each other, e.g. by welding. In addition, after the first current collector 120 and the first terminal 130 are coupled, the connecting part 120a of the first current collector 120 may be relatively easily bent, and thus the first cap plate 171 may be relatively easily coupled to the opening 161 of the case 160.

The second cap assembly 180 may be coupled to the right-side opening 162 of the case 160. According to some embodiments, the second cap assembly 180 may include a second cap plate 181, a second coupling member 182, and a second seal gasket 183. The second cap assembly 180 may have the same shape and structure as the first cap assembly 170. In addition, the coupling shape and structure of the second cap assembly 180 and the second terminal 150 may be the same as the coupling shape and structure of the first cap assembly 170 and the first terminal 130. However, with respect to the case 160, the coupling shape of the second cap assembly 180 and the second terminal 150 may be symmetrical with the coupling shape of the first cap assembly 170 and the first terminal 130.

In the secondary battery 100, the first cap assembly 170 coupled to the first terminal 130 may be coupled to the opening of one side of the case 160, and the second cap assembly 180 coupled to the second terminal 150 may be coupled to the opening of the other side of the case 160, so that the first terminal 130 and the second terminal 150 are located on both sides of the case 160. The secondary battery 100 includes the first terminal 130 and the second terminal 150 provided on both sides (e.g., opposite sides), respectively, and when a plurality of secondary batteries 100 are combined in a module form, a cooling member may be coupled to the upper and lower regions of the case 160, respectively, thereby reducing deterioration of the secondary battery 100 and improving cooling performance.

For example, in a state in which long sides of the plurality of secondary batteries 100 are arranged to face each other, a battery module may electrically connect a first terminal and/or a second terminal exposed to both sides (e.g., opposite sides), respectively,

In addition, the secondary battery 100 includes the first terminal 130 and the second terminal 150 provided on both sides, respectively, and when a plurality of secondary batteries 100 are combined in a module form, charge/discharge current flows along each terminal from both directions, thereby reducing deterioration due to charge/discharge current. In addition, when a plurality of secondary batteries 100 are combined in a module form, the respective terminals may be connected in both directions, thereby increasing space utilization.

As described above, in the secondary battery of the present disclosure, because a current collector is made of a multi-layered metal thin film, the overall cross-sectional area can be increased, thereby relatively improving heat generation properties and facilitating bending.

In addition, the secondary battery of the present disclosure can prevent or reduce damage during welding by wrapping a region of a current collector, which is connected to a terminal and an electrode assembly, with a thicker metal than a metal thin film.

In addition, the secondary battery of the present disclosure includes a first terminal and a second terminal on both sides, respectively, and thus the cooling member can be coupled to the upper and lower regions of the case, respectively, even when a plurality of secondary batteries is combined in a module form, thereby preventing or reducing deterioration of the secondary battery, and improving cooling performance.

In addition, the secondary battery of the present disclosure a first terminal and a second terminal on both sides, respectively, and when a number of secondary batteries are combined in a module form, charge/discharge current flows along each terminal from both directions, thereby reducing deterioration due to charge/discharge current and increasing space utilization.

While aspects of some embodiments have been described for carrying out the secondary battery according to the present disclosure, it should be understood that the embodiments described herein should be considered in a descriptive sense only and not for purposes of limitation, and various changes in form and details may be made therein without departing from the scope of the disclosure as defined by the following claims.

## Claims

1. A secondary battery (100) comprising:
an electrode assembly (110) having a first electrode tab (111a) and a second electrode tab (112a) exposed to opposite sides, respectively, of the electrode assembly (110);
a first current collector (120) coupled to the first electrode tab (111a) of the electrode assembly (110);
a case (160) accommodating the electrode assembly (110) and the first current collector (120) and having the opposite sides opened;
a first cap plate (171) sealing an opening (161) of one side, from among the opposite sides, of the case (160); and
a first terminal (130) coupled to the first current collector (120) and exposed to the outside of the first cap plate (171),
wherein the first current collector (120) includes a first main plate (121) on which a multi-layered metal thin film (121z) is overlapped
**characterized in that**
the first current collector (120) includes a first sub-plate (122) surrounding both ends of the first main plate (121) in a longitudinal direction, respectively.

2. The secondary battery (100) of claim 1, wherein in the first current collector (120), a first sub-plate (122) of one side is in contact with and welded to the first electrode tab (111a), and a first sub-plate (122) of the other side is in contact with and welded to the first terminal (130).

3. The secondary battery (100) of claims 1 or 2, wherein the first current collector (120) comprises:
a connection part (120a) formed of the first main plate (121);
a first tab coupling part (120b) extending outwardly from one end of the connection part (120a), comprising the first main plate (121) and the first sub-plate (122) surrounding the first main plate (121), and coupled to the first electrode tab (111a); and
a first terminal coupling part (120c) extending outwardly from an other end of the connection part (120a), comprising the first main plate (121) and the first sub-plate (122) surrounding the first main plate (121), and coupled to the first terminal (130).

4. The secondary battery (100) of claim 3, wherein in the first current collector (120), a surface on which the first tab coupling part (120b) is in contact with and welded to the first electrode tab (111a) is the same as a surface on which the first terminal coupling part (120c) is in contact with and welded to the first terminal (130), and the connection part (120a) is bent at least once.

5. The secondary battery (100) of any of the preceding claims, wherein a thickness of the first sub-plate (122) is 2 to 5 times the thickness of a metal thin film (121z) of the first main plate (121).

6. The secondary battery (100) of any of the preceding claims, wherein the first main plate (121) is compressed in a state in which 4 to 10 sheets of a metal thin film (121z) of 0.05 mm to 0.2 mm are overlapped.

7. The secondary battery (100) of any of the preceding claims, wherein the first terminal (130) comprises:
a first inner terminal plate (131) inside the first cap plate (171);
a first outer terminal plate (133) outside the first cap plate (171); and
a first terminal pillar (132) coupled to the first inner terminal plate (131) and the first cap plate (171) from an inside, passing through the first cap plate (171), and coupled to the first outer terminal plate (133) from the outside of the first cap plate (171).

8. The secondary battery (100) of claim 7, wherein in the first current collector (120), the first sub-plate (122) is coupled to one surface of the first inner terminal plate (131) by welding.

9. The secondary battery (100) of any of the preceding claims, further comprising:
a second current collect or (140) coupled to the second electrode tab (112a) of the electrode assembly (110);
a second cap plate (181) sealing an opening (162) of the other side of the case (160); and
a second terminal (150) coupled to the second current collector (140) and exposed to the outside of the second cap plate (181).

10. The secondary battery (100) of claim 9, wherein the second current collector (140) comprises:
a second main plate on which a multi-layered metal thin film is overlapped; and
a second sub-plate surrounding both ends of the second main plate in the longitudinal direction, respectively.

11. The secondary battery (100) of any of the preceding claims, wherein a thickness of the first sub-plate (122) is 0.1 mm or more.

## Patentansprüche

1. Sekundärbatterie (100), umfassend:
eine Elektrodenbaugruppe (110) mit einer ersten Elektrodenlasche (111a) und einer zweiten Elektrodenlasche (112a), die jeweils an gegenüberliegenden Seiten der Elektrodenbaugruppe (110) freiliegen;
einen ersten Stromkollektor (120), der mit der ersten Elektrodenlasche (111a) der Elektrodenbaugruppe (110) gekoppelt ist;
ein Gehäuse (160), das die Elektrodenbaugruppe (110) und den ersten Stromkollektor (120) aufnimmt und dessen gegenüberliegende Seiten offen sind;
eine erste Kappenplatte (171), die eine Öffnung (161) einer der gegenüberliegenden Seiten des Gehäuses (160) abdichtet; und
einen ersten Anschluss (130), der mit dem ersten Stromkollektor (120) gekoppelt ist und zur Außenseite der ersten Kappenplatte (171) hin freiliegt,
wobei der erste Stromkollektor (120) eine erste Hauptplatte (121) umfasst, auf der ein mehrschichtiger Metall-Dünnfilm (121z) überlappt ist,
**dadurch gekennzeichnet, dass**
der erste Stromkollektor (120) eine erste Unterplatte (122) umfasst, die jeweils beide Enden der ersten Hauptplatte (121) in einer Längsrichtung umgibt.

2. Sekundärbatterie (100) nach Anspruch 1, wobei in dem ersten Stromkollektor (120) eine erste Unterplatte (122) einer Seite mit der ersten Elektrodenlasche (111a) in Kontakt steht und mit dieser verschweißt ist, während eine erste Unterplatte (122) der anderen Seite mit dem ersten Anschluss (130) in Kontakt steht und mit diesem verschweißt ist.

3. Sekundärbatterie (100) nach Anspruch 1 oder 2, wobei der erste Stromkollektor (120) Folgendes umfasst:
ein Verbindungsteil (120a), das aus der ersten Hauptplatte (121) gebildet ist;
ein erstes Laschenkopplungsteil (120b), das sich von einem Ende des Verbindungsteils (120a) nach außen erstreckt, die erste Hauptplatte (121) und die erste Unterplatte (122), die die erste Hauptplatte (121) umgibt, umfasst und mit der ersten Elektrodenlasche (111a) gekoppelt ist; und
ein erstes Anschlusskopplungsteil (120c), das sich von einem anderen Ende des Verbindungsteils (120a) nach außen erstreckt, die erste Hauptplatte (121) und die erste Unterplatte (122), die die erste Hauptplatte (121) umgibt, umfasst und mit dem ersten Anschluss (130) gekoppelt ist.

4. Sekundärbatterie (100) nach Anspruch 3, wobei in dem ersten Stromkollektor (120) eine Oberfläche, auf der das erste Laschenkopplungsteil (120b) mit der ersten Elektrodenlasche (111a) in Kontakt steht und mit dieser verschweißt ist, dieselbe ist wie eine Oberfläche, auf der das erste Anschlusskopplungsteil (120c) mit dem ersten Anschluss (130) in Kontakt steht und mit diesem verschweißt ist, und wobei das Verbindungsteil (120a) mindestens einmal gebogen ist.

5. Sekundärbatterie (100) nach einem der vorstehenden Ansprüche, wobei eine Dicke der ersten Unterplatte (122) das 2- bis 5-fache der Dicke eines Metall-Dünnfilms (121z) der ersten Hauptplatte (121) beträgt.

6. Sekundärbatterie (100) nach einem der vorstehenden Ansprüche, wobei die erste Hauptplatte (121) in einem Zustand komprimiert ist, in dem 4 bis 10 Lagen eines Metall-Dünnfilms (121z) von 0,05 mm bis 0,2 mm überlappt sind.

7. Sekundärbatterie (100) nach einem der vorstehenden Ansprüche, wobei der erste Anschluss (130) Folgendes umfasst:
eine erste innere Anschlussplatte (131) innerhalb der ersten Kappenplatte (171);
eine erste äußere Anschlussplatte (133) außerhalb der ersten Kappenplatte (171); und
eine erste Anschlusssäule (132), die mit der ersten inneren Anschlussplatte (131) und der ersten Kappenplatte (171) von innen gekoppelt ist, durch die erste Kappenplatte (171) verläuft und mit der ersten äußeren Anschlussplatte (133) von außerhalb der ersten Kappenplatte (171) gekoppelt ist.

8. Sekundärbatterie (100) nach Anspruch 7, wobei in dem ersten Stromkollektor (120) die erste Unterplatte (122) durch Schweißen mit einer Oberfläche der ersten inneren Anschlussplatte (131) gekoppelt ist.

9. Sekundärbatterie (100) nach einem der vorstehenden Ansprüche, umfassend ferner:
einen zweiten Stromkollektor (140), der mit der zweiten Elektrodenlasche (112a) der Elektrodenbaugruppe (110) gekoppelt ist;
eine zweite Kappenplatte (181), die eine Öffnung (162) der anderen Seite des Gehäuses (160) abdichtet; und
einen zweiten Anschluss (150), der mit dem zweiten Stromkollektor (140) gekoppelt ist und zur Außenseite der zweiten Kappenplatte (181) hin freiliegt.

10. Sekundärbatterie (100) nach Anspruch 9, wobei der zweite Stromkollektor (140) Folgendes umfasst:
eine zweite Hauptplatte, auf der ein mehrschichtiger Metall-Dünnfilm überlappt ist; und
eine zweite Unterplatte, die jeweils beide Enden der zweiten Hauptplatte in der Längsrichtung umgibt.

11. Sekundärbatterie (100) nach einem der vorstehenden Ansprüche, wobei eine Dicke der ersten Unterplatte (122) 0,1 mm oder mehr beträgt.

## Revendications

1. Batterie secondaire (100) comportant :
un ensemble électrode (110) présentant une première languette d'électrode (111a) et une deuxième languette d'électrode (112a) exposées respectivement à des côtés opposés de l'ensemble électrode (110) ;
un premier collecteur de courant (120) couplé à la première languette d'électrode (111a) de l'ensemble électrode (110) ;
un boîtier (160) recevant l'ensemble électrode (110) et le premier collecteur de courant (120) et présentant des côtés ouverts opposés ;
une première plaque de capuchon (171) scellant une ouverture (161) d'un côté, parmi les côtés opposés, du boîtier (160) ; et
une première borne (130) couplée au premier collecteur de courant (120) et exposée à l'extérieur de la première plaque de capuchon (171),
dans laquelle le premier collecteur de courant (120) comprend une première plaque principale (121) sur laquelle un film mince métallique multicouche (121z) est chevauché
**caractérisée en ce que**
le premier collecteur de courant (120) comprend une première sous-plaque (122) entourant les deux extrémités de la première plaque principale (121) dans une direction longitudinale, respectivement.

2. Batterie secondaire (100) selon la revendication 1, dans laquelle dans le premier collecteur de courant (120), une première sous-plaque (122) d'un côté est en contact avec et soudée à la première languette d'électrode (111a), et une première sous-plaque (122) de l'autre côté est en contact avec et soudée à la première borne (130).

3. Batterie secondaire (100) selon la revendication 1 ou 2, dans laquelle le premier collecteur de courant (120) comporte :
une pièce de connexion (120a) formée de la première plaque principale (121) ;
une première pièce de couplage de languette (120b) s'étendant vers l'extérieur à partir d'une extrémité de la pièce de connexion (120a), comportant la première plaque principale (121) et la première sous-plaque (122) entourant la première plaque principale (121), et couplée à la première languette d'électrode (111a) ; et
une première pièce de couplage de borne (120c) s'étendant vers l'extérieur à partir d'une autre extrémité de la pièce de connexion (120a), comportant la première plaque principale (121) et la première sous-plaque (122) entourant la première plaque principale (121), et couplée à la première borne (130).

4. Batterie secondaire (100) selon la revendication 3, dans laquelle dans le premier collecteur de courant (120), une surface sur laquelle la première pièce de couplage de languette (120b) est en contact avec et soudée à la première languette d'électrode (111a) est la même qu'une surface sur laquelle la première pièce de couplage de borne (120c) est en contact avec et soudée à la première borne (130), et la pièce de connexion (120a) est courbée au moins une fois.

5. Batterie secondaire (100) selon l'une quelconque des revendications précédentes, dans laquelle une épaisseur de la première sous-plaque (122) est de 2 à 5 fois l'épaisseur d'un film mince métallique (121z) de la première plaque principale (121).

6. Batterie secondaire (100) selon l'une quelconque des revendications précédentes, dans laquelle la première plaque principale (121) est comprimée dans un état dans lequel 4 à 10 feuilles d'un film mince métallique (121z) de 0,05 mm à 0,2 mm se chevauchent.

7. Batterie secondaire (100) selon l'une quelconque des revendications précédentes, dans laquelle la première borne (130) comporte :
une première plaque de borne interne (131) à l'intérieur de la première plaque de capuchon (171) ;
une première plaque de borne externe (133) à l'extérieur de la première plaque de capuchon (171) ; et
un premier pilier de borne (132) couplé à la première plaque de borne interne (131) et à la première plaque de capuchon (171) depuis un intérieur, passant à travers la première plaque de capuchon (171) et couplé à la première plaque de borne externe (133) depuis l'extérieur de la première plaque de capuchon (171).

8. Batterie secondaire (100) selon la revendication 7, dans laquelle dans le premier collecteur de courant (120), la première sous-plaque (122) est couplée à une surface de la première plaque de borne interne (131) par soudage.

9. Batterie secondaire (100) selon l'une quelconque des revendications précédentes, comportant en outre :
un deuxième collecteur de courant (140) couplé à la deuxième languette d'électrode (112a) de l'ensemble électrode (110) ;
une deuxième plaque de capuchon (181) scellant une ouverture (162) de l'autre côté du boîtier (160) ; et
une deuxième borne (150) couplée au deuxième collecteur de courant (140) et exposée à l'extérieur de la deuxième plaque de capuchon (181).

10. Batterie secondaire (100) selon la revendication 9, dans laquelle le deuxième collecteur de courant (140) comporte :
une deuxième plaque principale sur laquelle un film mince métallique multicouche est chevauché ; et
une deuxième sous-plaque entourant les deux extrémités de la deuxième plaque principale dans la direction longitudinale, respectivement.

11. Batterie secondaire (100) selon l'une quelconque des revendications précédentes, dans laquelle une épaisseur de la première sous-plaque (122) est de 0,1 mm ou plus.
